# FASCICULE DE BREVET EUROPEEN

(11) **EP 1 869 320 B1**
(45) Date de publication et mention de la délivrance du brevet: **30.07.2008**
(21) Numéro de dépôt: 06726074.5
(22) Date de dépôt: 13.03.2006
(51) Int. Cl.: F04B 15/04, A22C 11/04

(54) **POMPE ROTATIVE A PISTONS**
ROTATIONSKOLBENPUMPE
ROTARY PISTON PUMP

(30) Priorité: 11.04.2005 FR 0503554
(43) Date de publication de la demande: 26.12.2007
(73) Titulaire: Stork Food Systems France, 56150 Baud (FR)
(72) Inventeur: LE PAIH, Jacques, F-56930 Plumeliau (FR)
(74) Mandataire: Bentz, Jean-Paul
(86) Numéro de dépôt international: PCT/FR2006/000545
(87) Numéro de publication internationale: WO 2006/108935

(56) Documents cités:
- FR-A- 1 325 528
- FR-A- 2 127 764
- GB-A- 1 480 683
- US-A- 3 922 755
- US-A- 4 821 377

## Description

La présente invention concerne une pompe rotative à pistons pour produits semi-solides. La présente invention concerne plus particulièrement une pompe rotative à pistons pour viande hachée, notamment pour la fabrication de saucisses ou le portionnement de viande hachée comprenant de gros morceaux de muscle. Une telle pompe est connue par example du document FR 1 325 528 A.

Dans le domaine de la fabrication de saucisses, il est connu des pompes à pistons comprenant un stator définissant une cavité cylindrique, un rotor ou barillet logé dans ladite cavité cylindrique, apte à être entraîné en rotation par l'arbre d'un moteur, ledit rotor comprenant un ensemble d'alésages disposés axialement et circonférentiellement espacés, dans lesquels sont montés des pistons, une came mécanique coopérant avec les pistons pour provoquer lors de la rotation du barillet un mouvement alterné de va-et-vient desdits pistons entre une position basse et une position haute, un couvercle fermant la cavité cylindrique et comprenant un orifice d'alimentation venant en communication avec au moins une chambre cylindrique formée par un alésage cylindrique du barillet et son piston associé, et destiné à être en communication avec une trémie, et un orifice de refoulement apte à venir simultanément en communication avec au moins deux chambre cylindriques consécutives. Pour faciliter le remplissage des chambres cylindriques, il est connu d'appliquer un vide par le haut dans les chambres cylindriques, lorsque les pistons sont en position basse, par l'intermédiaire d'un orifice de mise sous vide prévu sur le couvercle. Dans des pompes de conception similaire, les pistons sont logés dans des chambres radiales et les orifices d'alimentation et de refoulement sont formés au niveau du stator.

La viande hachée sortant de telles pompes conservent ses qualités. Toutefois, de telles pompes ne permettent pas d'obtenir en sortie un débit constant de produits, malgré divers ajustements apportés à la forme de l'orifice de refoulement et à la came mécanique. Le poids des saucisses obtenues avec ces pompes peut varier de 10 à 15% par rapport au poids moyen visé. Pour leur commercialisation, il est nécessaire de garantir un poids unitaire sensiblement constant correspondant au poids annoncé. Le fabricant est alors obligé d'augmenter le poids moyen visé pour être sûr d'atteindre le poids annoncé. Ces pompes sont donc très peu utilisées à ce jour en raison des pertes importantes de produits pour le fabricant.

Pour remplacer ces pompes à pistons, il a été proposé des pompes à palettes. De telles pompes à palettes assurent un débit sensiblement constant. Toutefois, la viande subit dans la pompe un fort laminage et une pression importante qui a pour effet de chauffer la viande et la graisse de la viande ainsi chauffée a tendance à s'étaler. En sortie de pompe, la viande est totalement dénaturée et présente un aspect blanchâtre.

Le but de la présente invention est de pallier les inconvénients précités en proposant une pompe qui assure un débit sensiblement constant en sortie, tout en préservant la qualité de la viande hachée.

Dans ce but, la présente invention a pour objet une pompe rotative à pistons pour produits semi-solides, en particulier pour viande hachée, comprenant
- un stator définissant une cavité cylindrique,
- un rotor ou barillet logé dans ladite cavité cylindrique, apte à être entraîné en rotation par un moteur, ledit rotor comprenant un ensemble d'alésages circonférentiellement espacées, par exemple au nombre de six, dans lesquels sont montés des pistons,
- une came mécanique coopérant avec les pistons pour provoquer lors de la rotation du barillet un mouvement alterné de va-et-vient desdits pistons entre une position basse et une position haute,
- un couvercle fermant la cavité cylindrique,
- un orifice d'alimentation venant en communication avec au moins une chambre cylindrique formée par un alésage cylindrique du barillet et son piston associé, et destiné à être en communication avec une trémie,
- un orifice de refoulement apte à venir simultanément en communication avec au moins deux chambres cylindriques consécutives, et
- des moyens de mise sous vide des chambres cylindriques pour leur remplissage,
caractérisée en ce que lesdits moyens de mise sous vide comprennent au moins un canal de mise sous vide débouchant dans la partie inférieure de chaque chambre cylindrique, lesdits moyens de mise sous vide étant aptes à mettre sous vide par le bas chaque chambre cylindrique par son canal de mise sous vide lorsque son piston associé est en position basse.

La présente invention propose donc d'effectuer une aspiration par le bas dans les chambres cylindriques au moment de leur remplissage. En effet, la demanderesse s'est aperçue que dans les pompes de l'art antérieur les chambres n'étaient pas remplies de manière homogène, des vides pouvant demeurer dans la partie inférieure de la chambre, entre la viande et la face supérieure du piston, ce qui altérait le débit de la pompe. La viande tombant dans la chambre en début de remplissage, forme des dômes sous lesquels des vides demeurent, la présence de moyens d'aspiration par le haut ne permettant pas de supprimer ces vides. Le fait de prévoir selon l'invention des moyens de mise sous vide par le bas des chambres permet d'obtenir un débit en produit semi-solide de la pompe sensiblement constant, ledit débit de la pompe correspondant au moins en partie aux débits cumulés des pistons de deux chambres cylindriques consécutives devant l'orifice de refoulement.

Selon une particularité, lesdits moyens de mise sous vide sont aptes à stopper la mise sous vide de chaque chambre cylindrique par son canal de mise sous vide préalablement au déplacement de ladite chambre cylindrique en vis-à-vis de l'orifice de refoulement.

Selon un mode de réalisation, chaque chambre cylindrique comprend au moins un canal de mise sous vide formé sur la paroi cylindrique de l'alésage.

Avantageusement, chaque canal de mise sous vide peut être formé d'une gorge verticale ménagée sur la paroi cylindrique de l'alésage, par exemple de section globalement semi-circulaire, ladite gorge s'étendant depuis la face inférieure du barillet sur une hauteur suffisante pour déboucher dans la chambre cylindrique lorsque le piston est en position basse, lesdits moyens de mise sous vide étant aptes à mettre sous vide la chambre inférieure du stator sur laquelle débouchent lesdites gorges verticales.

Selon un mode de réalisation, chaque piston est apte à être déplacé par la came mécanique de sa position basse vers une position basse intermédiaire dans laquelle le piston obture le ou lesdits canaux de mise sous vide, le déplacement étant effectué en amont de l'orifice de refoulement; de préférence lorsque ledit piston se trouve au moins partiellement en vis-à-vis de l'orifice d'alimentation.

Avantageusement, chaque chambre cylindrique comprend au moins deux canaux de mise sous vide, par exemple trois, répartis à intervalle angulaire régulier, sur la paroi cylindrique de l'alésage dans le cas desdites gorges verticales précitées.

Selon une autre particularité, chaque piston comprend une tête de piston reliée à une tige de piston, ladite tête comportant un corps recouvert d'une garniture en un matériau ayant des propriétés de glissement, de préférence de qualité alimentaire, en intercalant entre le corps et ladite garniture une couche intermédiaire ayant des propriétés élastiques, ladite garniture formant une surface d'étanchéité par laquelle, le piston vient en contact glissant, de manière sensiblement étanche, contre la paroi cylindrique de l'alésage.

Selon une autre particularité, les moyens de mise sous vide comprennent en outre un orifice de mise sous vide pour la mise sous vide par le haut des chambres, ladite pompe comprenant de préférence un système de pompe à vide auquel sont connectés à la fois les canaux de mise sous vide des chambres cylindriques, ainsi que ledit orifice de mise sous vide.

Selon un mode de réalisation, les chambres cylindriques du rotor sont disposées axialement, les pistons étant déplaçables parallèlement à l'axe de rotation du barillet, ledit couvercle étant muni desdits orifices d'alimentation et de refoulement, ainsi que d'un éventuel orifice de mise sous vide. La pompe peut également être équipée d'une trémie d'alimentation. Avantageusement, la trémie comprend un dispositif d'alimentation à hélice entraîné par le moteur d'entraînement du barillet.

En outre la présente demanderesse s'est aperçue que dans les pompes de l'art antérieur, les morceaux de muscles qui débordent de la partie supérieure de la chambre sont parfois tirés hors de la chambre lors de la rotation du barillet, par l'extrémité amont de l'orifice d'alimentation, ou arrachés avec une partie du morceau qui est enlevé de la chambre. Ainsi, dans le cas de viande hachée comprenant des gros morceaux de muscles, le remplissage des chambres n'est pas homogène, ce qui altère également le débit de la pompe.

Selon une particularité, la pompe selon l'invention comprend des moyens de coupe, comportant une lame disposée le long du bord aval de l'orifice d'alimentation, pour couper les morceaux de produits dépassant des chambres cylindriques lors de leur passage au-delà de l'orifice d'alimentation. La présente invention a également pour objet une pompe équipée de tels moyens de coupe, avec ou sans les moyens de mise sous vide par le bas décrit précédemment .

L'invention sera mieux comprise, et d'autres buts, détails, caractéristiques et avantages apparaîtront plus clairement au cours de la description explicative détaillée qui va suivre d'un mode de réalisation particulier actuellement préféré de l'invention, en référence au dessin schématique annexé, sur lequel :
- la figure 1 représente une vue de côté d'un poussoir équipé d'une pompe à pistons selon l'invention ;
- la figure 2 représente une vue en perspective de la partie supérieure de la pompe, avec son couvercle en position ouverte ;
- la figure 3 représente une vue schématique de dessus du barillet de la pompe ;
- la figure 4 représente une vue partielle en coupe longitudinale du barillet de la figure 3 illustrant les positions de deux pistons adjacents dans leurs chambre cylindriques respectives, l'un en position basse, l'autre en position basse intermédiaire ; et,
- les figures 5, 6 et 7 représentent des vues agrandies respectivement des détails V, VI et VII de la figures 4.

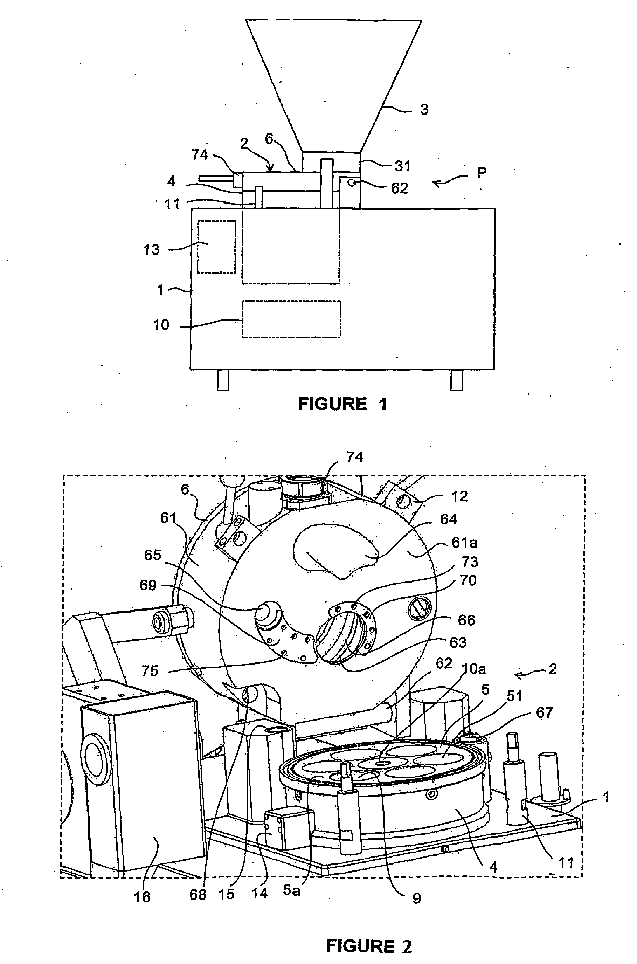

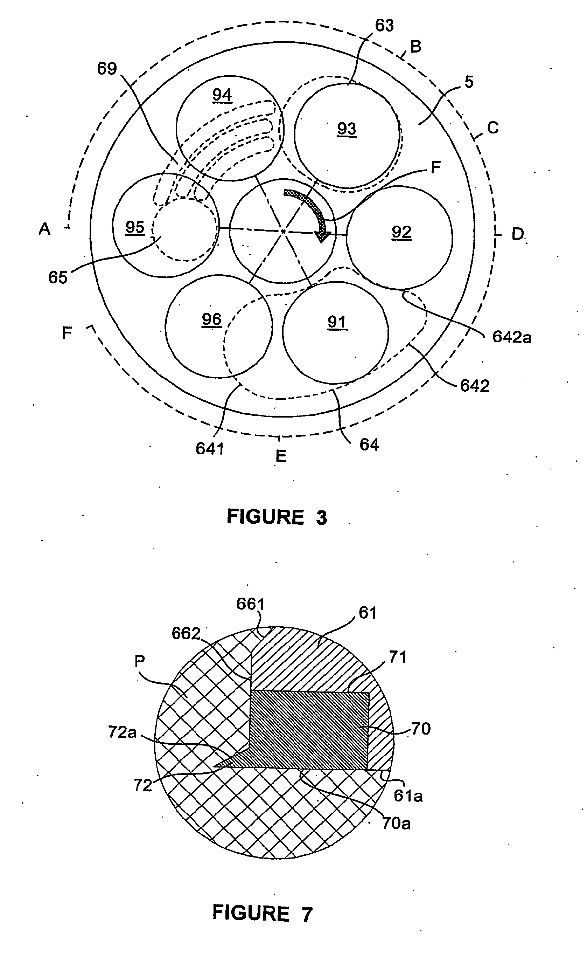

La figure 1 représente un dispositif appelé couramment poussoir P comprenant un châssis support 1 sur lequel est montée une pompe à piston rotative 2 alimentée par une trémie 3. Selon les figures 1 et 2, la pompe à piston 2 comprend de manière classique un stator ou carter 4 définissant une cavité cylindrique fermée par un couvercle supérieur 6. Un rotor ou barillet annulaire 5 est monté dans la cavité cylindrique solidaire en rotation autour d'un arbre axial 10a entraîné en rotation dans le sens horaire par un moteur 10 disposé dans le châssis 1. Le moteur 10 est par exemple un moteur de type sans balai, appelé classiquement moteur "brushless", commandé par un variateur programmé. Le barillet comprend six alésages 51 disposées axialement et circonférentiellement espacées autour de l'arbre 10a, dans lesquels sont logés des pistons 9, les six pistons étant référencés de 91 à 96 sur la figure 3.

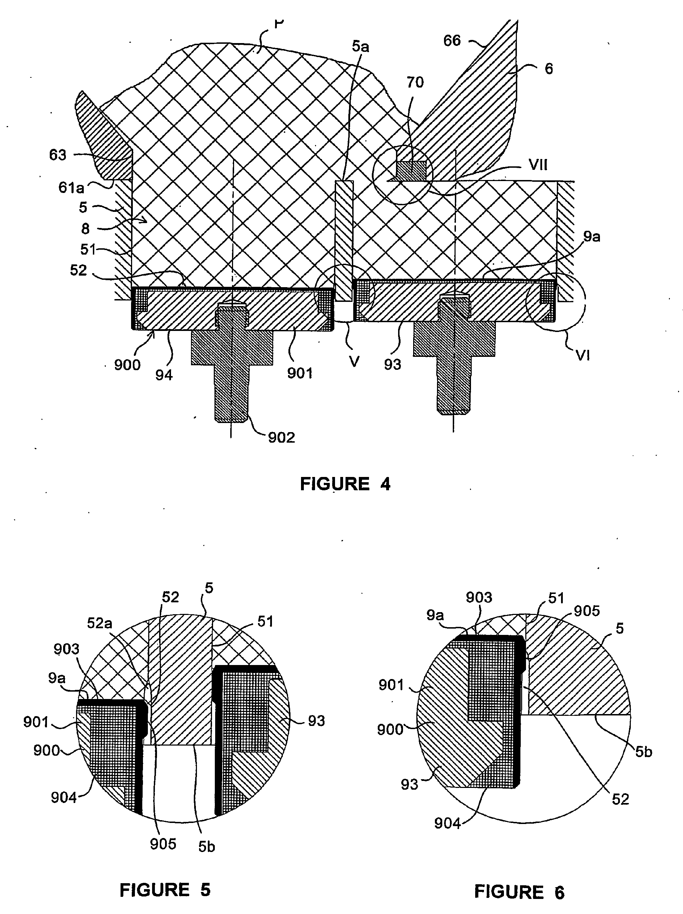

De manière connue, une came mécanique coopère avec les extrémités inférieures des pistons opposées au couvercle, pour provoquer le mouvement alterné des pistons dans les alésages entre une position basse et une position haute. Une description du déplacement par la came mécanique des pistons sur un tour va être effectuée en référence à la figure 3. Les positions angulaires des pistons par rapport au stator 4 référencées A à E sur la figure 3 correspondent à des positions particulières des pistons dans leur alésage. Dans la position angulaire A, le piston est en position basse. Le barillet étant entraîné dans le sens horaire, tel qu'illustré par la flèche référencée F, les pistons sont maintenus dans cette position basse sur environ 60° jusqu'à la position angulaire B. Les pistons sont ensuite amenés dans une position basse intermédiaire à la position angulaire C, disposée à environ 30° de la position angulaire B, et sont maintenus sur environ 30° dans cette position basse intermédiaire jusqu'à la position angulaire D, diamétralement opposée à la position angulaire A. Les pistons sont alors dans leur phase ascendante de refoulement sur environ 90° de la position D jusqu'à la position angulaire E. Dans cette position E, les pistons sont en position haute, leur face supérieure 9a affleurant sensiblement la face supérieure 5a du barillet sur laquelle débouchent les alésages. Les pistons sont maintenus dans cette position haute sur environ 60° jusqu'à la position F. Les pistons sont ensuite dans leur phase descendante sur environ 30° de la position F jusqu'à la position A, dans laquelle, les pistons sont en position basse. La figure 4 illustre une vue partielle en coupe longitudinale du barillet de la figure 3, après une rotation d'environ 50 °, le piston 93 étant en position basse intermédiaire, le piston 94 en position basse.

Le couvercle 6 est constitué d'une platine circulaire 61 montée pivotante sur le châssis 1 autour d'un axe horizontal 62. Le couvercle est déplaçable entre une position ouverte, illustrée à la figure 2, et une position fermée, illustrée à la figure 1, dans laquelle le couvercle est en contact glissant par sa face dite interne 61a avec la face supérieure 5a du barillet. Le déplacement du couvercle entre ses deux positions est réalisé par un système motorisé 16. Le maintien du couvercle dans sa position fermée est assuré par des moyens d'assemblage 11, 12. La paroi cylindrique de chaque alésage définit une chambre cylindrique 8 (figure 4) délimitée d'un côté par le couvercle et de l'autre côté par la face supérieure 9a du piston qui coulisse de manière sensiblement étanche entre sa position basse et sa position haute dans l'alésage.

La face interne 61a du couvercle présente un orifice d'alimentation 63, un orifice de refoulement 64 et un orifice de mise sous vide 65.

L'orifice d'alimentation 63 est en communication via un canal d'alimentation 66 avec la sortie de la trémie 3 assemblée sur la face externe du couvercle, et est disposé de manière à venir en vis-à-vis d'une chambre cylindrique contenant un piston dans sa position basse. Cet orifice d'alimentation, de dimensions légèrement supérieures au diamètre des chambres cylindriques, a une forme ovale et est par exemple centré en vis-à-vis d'un piston dans la position angulaire B précitée. La trémie 3 comprend un système d'alimentation à hélice 31 (figure 1) entraîné en rotation dans la position fermée du couvercle par le moteur 10 précité servant à l'entraînement du barillet, par l'intermédiaire d'un arbre de transmission 67.

L'orifice d'alimentation est équipé au niveau de son extrémité aval d'une lame plane 70, globalement en arc de cercle. Comme mieux visible à la figure 7, la lame est montée dans un renfoncement 71 du couvercle, de sorte que sa face externe 70a affleure la surface interne 61a du couvercle, le tranchant 72 de la lame étant en saillie par rapport à la paroi du canal d'alimentation 66. Lorsque le couvercle est en position fermée, la lame vient à plat contre le barillet par sa face externe 70a, le biseau 72a de son tranchant étant orienté dans la direction opposée au barillet. Dans l'exemple illustré, la paroi du conduit d'alimentation 66 comprend une portion tronconique 661 se prolongeant par une portion de sortie cylindrique 662 définissant l'orifice d'alimentation du couvercle, le renfoncement de réception 71 de la lame étant formé dans cette portion de sortie cylindrique. Comme visible sur la figure 2, la lame s'étend sur un arc d'environ 180° et est montée de manière amovible dans le renfoncement, par exemple au moyen de vis 73, pour permettre son remplacement ou son affûtage.

L'orifice de refoulement 64 de forme allongée est en communication avec une tête d'extrusion latérale 74, et est disposé et conformé de sorte qu'au moins deux chambres cylindriques soient continûment en communication avec elle. L'orifice présente une partie principale 641 (figure 3) de forme générale circulaire centrée sur un piston en position E, qui se prolonge d'aval en amont par rapport au sens de rotation du barillet par une partie secondaire 642 de profondeur inférieure à celle de la partie principale présentant une extrémité amont concave 642a.

Pour la mise sous vide des chambres cylindriques, chaque alésage 51 comprend trois gorges verticales 52, de section transversale sensiblement semi-circulaire, disposées à 120° les unes des autres et débouchant sur la face inférieure 5b du barillet. Comme visible sur les figures 4 et 5, la hauteur des gorges verticales et la course des pistons sont définis de sorte que l'extrémité supérieure 52a dé chaque gorge verticale soit disposée au-delà de la face supérieure 9a des pistons dans leur position basse afin de mettre les chambres cylindriques du barillet en communication avec la chambre inférieure du stator définie sous le barillet. Cette chambre inférieure est mise continûment sous vide lors de la mise en marche du poussoir par l'intermédiaire d'une pompe à vide. La pompe à vide 13 (figure 1) est par exemple placée sur le châssis et est raccordée à la chambre inférieure du stator via un premier canal d'aspiration, s'étendant dans un capotage 14, et connecté à un perçage radial de la paroi cylindrique du carter. Tel que mieux visible sur la figure 6, dans la position basse intermédiaire précitée des pistons, la face supérieure du piston vient se disposer au-dessus des gorges verticales pour supprimer l'aspiration par ces dernières.

Chaque tête de piston 900 comprend un corps métallique 901 par lequel la tête est montée à l'extrémité de la tige de piston 902, une garniture ou calotte 903 recouvrant ledit corps, réalisé en un matériau de type PTFE, en intercalant une couche intermédiaire 904 en un matériau élastique, tel qu'un élastomère de type silicone. La calotte comprend une paroi circulaire supérieure se prolongeant par une paroi annulaire, cette dernière étant munie d'une collerette 905 définissant la surface d'étanchéité par laquelle le piston vient en contact glissant avec la paroi cylindrique de l'alésage. Pour une meilleure tenue dans le temps de la surface d'étanchéité, la collerette présente une section transversale globalement trapézoïdale, la surface d'étanchéité étant reliée à la paroi circulaire supérieure par un chanfrein. De préférence, les gorges verticales s'effacent progressivement en partie supérieure, les extrémités supérieures ayant globalement une section transversale semi-conique.

A titre d'exemple numérique, chaque gorge verticale s'étend sur une hauteur d'environ 8 millimètres (mm), la collerette 905 a une hauteur d'environ 4 mm, la course d'un piston entre sa position haute et sa position basse est d'environ 55 mm, et sa course entre sa position basse et sa position basse intermédiaire d'environ 5 mm.

L'orifice de mise sous vide 65 précité du couvercle débouche sur un canal s'étendant latéralement et dont l'entrée 68 vient en communication, lors de la fermeture du couvercle, avec d'un second canal d'aspiration 15 de la pompe à vide montée sur le châssis 1. L'orifice de mise sous vide est disposé en aval de l'orifice d'alimentation par rapport au sens de rotation F du barillet, de manière à être sensiblement en vis-à-vis du piston en position A. La face interne 61a est munie d'une ou plusieurs rainures 69 débouchant sur l'orifice de mise sous vide. L'arc sur lequel s'étend la ou les rainures est déterminé de sorte que chaque chambre cylindrique se déplaçant depuis ledit orifice de mise sous vide jusqu'à l'orifice d'alimentation soit sous vide. La ou les rainures sont formées par une ou plusieurs plaques montées de manière amovible, par exemple des vis, dans un renfoncement du couvercle pour adapter le type et le nombre de rainure au degré d'aspiration souhaité. Cette mise sous vide via les gorges verticales 52 et l'orifice de mise sous vide 65 et assure le remplissage de manière sensiblement homogène par aspiration des chambres cylindriques avec le produit P provenant de la trémie.

Une description détaillée du fonctionnement de la pompe, et en particulier du remplissage des chambres cylindriques va à présent être effectuée en référence aux figures 3 et 4. Dans la position du barillet illustrée à la figure 3, le piston référencé 92 est dans la position C, juste avant l'extrémité amont 642a de l'orifice de refoulement. Ce piston 92 est en position basse intermédiaire, et s'apprête à commencer sa phase ascendante de refoulement. Le piston 91 est en phase ascendante, en vis-à-vis de l'orifice de refoulement. Le piston 96 est partiellement en vis-à-vis de l'orifice de refoulement, mais en position haute, et sera maintenu dans cette position haute tant qu'il sera en communication de l'orifice de refoulement. Seul le piston 91 refoule du produit, tel que de la viande hachée, dans l'orifice de refoulement. Le piston référencé 95 est dans la position angulaire A précitée, en position basse et en vis-à-vis de l'orifice de mise sous vide. La chambre cylindrique associée à ce piston est mise sous vide à la fois via les gorges verticales et l'orifice de mise sous vide. Le piston 94 est également en position basse, en vis-à-vis des rainures 69 de mise sous vide, et commence sa phase de remplissage en vis-à-vis de l'orifice d'alimentation. Dès que la chambre cylindrique associée au piston 94 vient en communication avec l'orifice d'alimentation, le produit P commence à pénétrer dans la chambre cylindrique sous l'effet de l'aspiration obtenue par l'orifice de mise sous vide via les rainures et les gorges verticales. L'aspiration par le bas par l'intermédiaire des gorges verticales assure un bon remplissage de la partie inférieure de la chambre cylindrique, en évitant la formation de vides, la viande hachée venant bien à plat contre la surface supérieure des pistons. Le piston 93 en position angulaire B est en vis-à-vis de l'orifice d'alimentation, le remplissage de la chambre cylindrique associée étant terminé.

Au cours de la rotation du barillet depuis la position illustré à la figure 3, le remplissage de la chambre cylindrique associée au piston 94 se poursuit. Une fois la partie inférieure de la chambre cylindrique remplie, seule l'aspiration par le haut favorise le remplissage de la chambre cylindrique. La chambre cylindrique associée au piston 93 s'écarte progressivement au-delà de l'extrémité aval de l'orifice d'alimentation. Lors de ce déplacement les éventuels morceaux de muscle qui dépassent de la chambre cylindrique sont coupés par la lame 70. Lorsque le piston 93 arrive à la position angulaire C, le piston est déplacé vers le haut par la came mécanique dans sa position basse intermédiaire illustrée à la figure 4, dans laquelle la collerette 905 du piston vient obturer les gorges verticales pour supprimer l'aspiration par le bas. Le piston est maintenu en position basse intermédiaire jusqu'à la position angulaire D. Ce passage à une position intermédiaire avant le début de la phase ascendante de refoulement des pistons permet d'éviter que l'aspiration par le bas altère le débit du piston en début de refoulement. Ce passage en position basse intermédiaire est effectué lorsque la chambre cylindrique est toujours en communication avec l'orifice alimentation pour ne pas comprimer la viande hachée contenue dans la chambre cylindrique et en refouler une faible partie vers l'orifice d'alimentation. A partir de la position D, le piston commence sa phase ascendante en communication avec l'orifice de refoulement, son débit vient se cumuler à celui du piston disposé en amont.

La pompe selon l'invention peut être utilisée pour la fabrication d'un boudin continu à partir duquel seront réalisées des saucisses, ou pour le portionnement par exemple de viande hachée comprenant de gros morceaux de muscle, le barillet étant entraîné en rotation de manière discontinue.

Bien que l'invention ait été décrite en liaison avec un mode de réalisation particulier, il est bien évident qu'elle n'y est nullement limitée et qu'elle comprend tous les équivalents techniques des moyens décrits ainsi que leurs combinaisons si celles-ci entrent dans le cadre de l'invention. Dans un autre mode de réalisation la mise sous vide des chambres cylindriques par le bas est obtenue par des canaux verticaux débouchant sur la face supérieure des pistons. Des inserts montés mobiles dans lesdits canaux pourront alors être prévus pour obturer lesdits canaux dans la position basse intermédiaire des pistons.

## Revendications

1. Pompe rotative à pistons pour produits semi-solides, en particulier pour viande hachée, comprenant
- un stator (4) définissant une cavité cylindrique,
- un rotor ou barillet (5) logé dans ladite cavité cylindrique, apte à être entraîné en rotation par un moteur (10), ledit rotor comprenant un ensemble d'alésages (51) circonférentiellement espacés, dans lesquels sont montés des pistons (9),
- une came mécanique coopérant avec les pistons pour provoquer lors de la rotation du barillet un mouvement alterné de va-et-vient desdits pistons entre une position basse et une position haute,
- un couvercle (6) fermant la cavité cylindrique,
- un orifice d'alimentation (63) venant en communication avec au moins une chambre cylindrique formée par un alésage cylindrique du barillet et son piston associé, et destiné à être en communication avec une trémie (3),
- un orifice de refoulement (64) apte à venir simultanément en communication avec au moins deux chambres cylindriques consécutives, et
- des moyens de mise sous vide des chambres cylindriques (8) pour leur remplissage,
**caractérisée en ce que** lesdits moyens de mise sous vide comprennent au moins un canal de mise sous vide (52) débouchant dans la partie inférieure de chaque chambre cylindrique, lesdits moyens de mise sous vide étant aptes à mettre sous vide par le bas chaque de chambre cylindrique par son canal de mise sous vide lorsque son piston associé est en position basse.

2. Pompe selon la revendication 1, **caractérisée en ce que** lesdits moyens de mise sous vide sont aptes à stopper la mise sous vide de chaque chambre cylindrique (8) par son canal de mise sous vide (52) préalablement au déplacement de ladite chambre cylindrique en vis-à-vis de l'orifice de refoulement (64).

3. Pompe selon la revendication 1 ou 2, **caractérisée en ce que** chaque chambre cylindrique (8) comprend au moins un canal de mise sous vide (52) formé sur la paroi cylindrique de l'alésage (51).

4. Pompe selon la revendication 3, **caractérisée en ce que** chaque canal de mise sous vide est formé d'une gorge verticale (52) ménagée sur la paroi cylindrique de l'alésage (51), ladite gorge s'étendant depuis la face inférieure (5b) du barillet sur une hauteur suffisante pour déboucher dans la chambre cylindrique (8) lorsque le piston (9) est en position basse, lesdits moyens de mise sous vide étant aptes à mettre sous vide la chambre inférieure du stator (4) sur laquelle débouchent lesdites gorges verticales.

5. Pompe selon la revendication 4, **caractérisée en ce que** chaque piston (9) est apte à être déplacé par la came mécanique de sa position basse vers une position basse intermédiaire dans laquelle le piston obture le ou lesdits canaux de mise sous vide (52), le déplacement étant effectué en amont de l'orifice de refoulement (64), lorsque ledit piston se trouve au moins partiellement en vis-à-vis de l'orifice d'alimentation (63).

6. Pompe selon l'une des revendications précédentes, **caractérisée en ce que** chaque chambre cylindrique (8) comprend au moins deux canaux de mise sous vide (52) répartis à intervalle angulaire régulier.

7. Pompe selon l'une des revendications précédentes, **caractérisée en ce que** chaque piston (9) comprend une tête de piston (900) reliée à une tige de piston (902), ladite tête comprenant un corps (903) recouvert d'une garniture (904) en un matériau ayant des propriétés de glissement, en intercalant entre le corps et ladite garniture une couche intermédiaire (905) ayant des propriétés élastiques, ladite garniture formant une surface d'étanchéité par laquelle le piston (9) vient en contact glissant, de manière sensiblement étanche, contre la paroi cylindrique de l'alésage (51).

8. Pompe selon l'une des revendications précédentes, **caractérisée en ce que** les moyens de mise sous vide comprennent en outre un orifice de mise sous vide (65) pour la mise sous vide par le haut des chambres, ladite pompe comprenant un système de pompe à vide (13) auquel sont connectés à la fois les canaux de mise sous vide (52) des chambres cylindriques, et ledit orifice de mise sous vide (65).

9. Pompe selon l'une des revendications précédentes, **caractérisée en ce que** les chambres cylindriques (8) sont disposées axialement, les pistons (9) étant déplaçables parallèlement à l'axe de rotation du barillet, ledit couvercle (6) étant muni de l'orifice d'alimentation (63) et de l'orifice de refoulement (64).

10. Pompe selon l'une des revendications précédentes, **caractérisée en ce qu'**elle comprend en outre des moyens de coupe, comportant une lame (70) disposée le long du bord aval de l'orifice d'alimentation (63), pour couper les morceaux de produits dépassant des chambres cylindriques lors de leur passage au-delà de l'orifice d'alimentation.

## Claims

1. Rotary piston pump for semi-solid products, in particular for minced meat, comprising
- a stator (4) defining a cylindrical cavity,
- a rotor or barrel (5) housed in said cylindrical cavity, able to be driven in rotation by a motor (10), said rotor comprising an array of bores (51) spaced circumferentially, wherein pistons (9) are mounted,
- a mechanical cam cooperating with the pistons in order to provoke during the rotation of the barrel an alternating back and forth movement of said pistons between a low position and a high position,
- a lid (6) closing the cylindrical cavity,
- a feeding orifice (63) coming into communication with at least one cylindrical chamber formed by the barrel cylindrical bore and a piston associated therewith, and intended to be in communication with a hopper (3),
- a discharging orifice (64) able to come simultaneously in communication with at least two consecutive cylindrical chambers, and
- vacuuming means for vacuuming cylindrical chambers (8) for filling thereof,
**characterised in that** said vacuuming means include at least one vacuuming channel (52) connecting to the lower part of each cylindrical chamber, said vacuuming means being able to vacuum by the bottom each cylindrical chamber by the vacuuming channel therewith when the piston associated therewith is in lower position.

2. Pump according to claim 1, **characterised in that** said vacuuming means are able to stop the vacuuming of each cylindrical chamber (8) by the vacuuming channel therewith (52) prior to the moving of said cylindrical chamber opposite the discharging orifice (64).

3. Pump according to claim 1 or 2, **characterised in that** each cylindrical chamber (8) includes at least one vacuuming channel (52) formed on the cylindrical wall of the bore (51).

4. Pump according to claim 3, **characterised in that** each vacuuming channel is formed by a vertical groove (52) placed on the cylindrical wall of the bore (51), said groove extending from lower side (5b) of the barrel over a height that is sufficient to connect to the cylindrical chamber (8) when piston (9) is in low position, said vacuuming means being able to vacuum the lower chamber of stator (4) on which said vertical grooves connect.

5. Pump according to claim 4, **characterised in that** each piston (9) is able to be moved by the mechanical cam from its low position towards an intermediary low position wherein the piston blocks off said vacuuming channel(s) (52), with the movement being carried out upstream from the discharging orifice (64), when said piston is located at least partially opposite feeding orifice (63).

6. Pump according to any of the preceding claims, **characterised in that** each cylindrical chamber (8) includes at least two vacuuming channels (52) distributed at a regular angular interval.

7. Pump according to any of the preceding claims, **characterised in that** each piston (9) includes a piston head (900) connected to a piston rod (902), said head comprising a body (903) covered with a packing (904) made from a material having sliding properties, by inserting between the body and said packing an intermediary layer (905) having elastic properties, said packing forming a sealing surface through which piston (9) comes into sliding contact, in a substantially sealed manner, against the cylindrical wall of the bore (51).

8. Pump according to any of the preceding claims, **characterised in that** vacuuming means further comprise a vacuuming orifice (65) for vacuuming the chambers from the top, said pump comprising a vacuum pump system (13) to which are connected vacuuming channels (52) of the cylindrical chambers, as well as said vacuuming orifice (65).

9. Pump according to any of the preceding claims, **characterised in that** the cylindrical chambers (8) are positioned axially, pistons (9) able to be moved in parallel to the axis of rotation of the barrel, said lid (6) being equipped with the feeding orifice (63) and the discharging orifice (64).

10. Pump according to any of the preceding claims, **characterised in that** it further comprises cutting means, comprising a blade (70) positioned along the downstream edge of the feeding orifice (63), in order to cut the pieces of products protruding from the cylindrical chambers during their passage beyond the feeding orifice.

## Patentansprüche

1. Rotationspumpe mit Kolben für halbfeste Produkte, insbesondere für Hackfleisch, die aufweist
- einen Ständer (4), der einen zylindrischen Hohlraum definiert,
- einen Rotor oder eine Trommel (5), der/die in dem zylindrischen Hohlraum liegt und dazu geeignet ist, von einem Motor (10) zum Rotieren gebracht zu werden, wobei der Rotor eine Gruppe von in Umfangsrichtung liegenden Bohrungen (51) aufweist, in denen die Kolben (9) angebracht sind,
- eine mechanische Nocke, die mit den Kolben zusammenwirkt, um während der Rotation der Trommel eine alternierende Hin- und Herbewegung der Kolben zwischen einer Grundstellung und einer Hochstellung herbeizuführen,
- einen Deckel (6), der den zylindrischen Hohlraum schließt,
- eine Einfüllöffnung (63), die mit mindestens einer zylindrischen Kammer in Kontakt steht, die durch eine zylindrische Bohrung der Trommel und ihres verbundenen Kolbens ausgebildet ist, und die Einfüllöffnungdazu vorgesehen ist, mit einem Trichter (3) verbunden zu sein,
- eine Anstauöffnung (64), die dazu geeignet ist, gleichzeitig in Kontakt mit mindestens zwei zylindrischen, aufeinander folgenden Kammern zu kommen, und
- Evakuiermittel der zylindrischen Kammern (8), zu deren Befüllung,
- die **dadurch gekennzeichnet ist, dass** die Evakuiermittel mindestens eine Vakuumleitung (52) aufweisen, die in den inneren Teil jeder zylindrischen Kammer mündet, wobei die Evakuiermittel dazu geeignet sind, über den Boden jede zylindrische Kammer mittels deren Vakuumleitung zu evakuieren, wenn der damit verbundene Kolben in Grundstellung ist.

2. Pumpe nach Anspruch 1, die **dadurch gekennzeichnet ist, dass** die Evakuiermittel dazu geeignet sind, die Evakuierung jeder zylindrischen Kammer (8) über deren Vakuumleitung (52) vorab mittels Verlagerung der zylindrischen Kammer gegenüber zur Anstauöffnung (64) zu stoppen.

3. Pumpe nach Anspruch 1 oder 2, die **dadurch gekennzeichnet ist, dass** jede zylindrische Kammer (8) mindestens eine Vakuumleitung (52) aufweist, die an der zylindrischen Wand der Bohrung (51) ausgebildet ist.

4. Pumpe nach Anspruch 3, die **dadurch gekennzeichnet ist, dass** jede Vakuumleitung aus einem senkrechten Durchlass (52) gebildet ist, der an der zylindrischen Wand der Bohrung (51) ausgebildet ist, wobei der Durchlass sich von der inneren Fläche (5b) der Trommel bis zu einer Höhe erstreckt, die ausreichend ist, um in die zylindrische Kammer (8) hinein zu reichen, wenn sich der Kolben (9) in Grundstellung befindet, wobei die Evakuiermittel dazu geeignet sind, die innere Kammer des Ständers (4) zu evakuieren, in die die vertikalen Durchlässe münden.

5. Pumpe nach Anspruch 4, die **dadurch gekennzeichnet ist, dass** jeder Kolben (9) dazu geeignet ist, mittels der mechanischen Nocke aus ihrer Grundstellung in eine Zwischengrundstellung bewegt zu werden, in der der Kolben die Vakuumleitung(en) (52) verschließt, wobei die Bewegung oberhalb der Anstauöffnung (64) ausgeführt wird, wenn sich der Kolben zumindest teilweise gegenüber der Einfüllöffnung (63) befindet.

6. Pumpe nach einem der vorhergehenden Ansprüche, die **dadurch gekennzeichnet ist, dass** jede zylindrische Kammer (8) mindestens zwei Vakuumleitungen (52) aufweist, die in einem regelmäßigen Winkelabstand verteilt sind.

7. Pumpe nach einem der vorhergehenden Ansprüche, **dadurch gekennzeichnet, dass** jeder Kolben (9) einen Kolbenkopf (900) aufweist, der mit einer Kolbenstange (902) verbunden ist, wobei der Kopf einen Körper (903) umfasst, der mit einem Belag (904) aus einem Material bedeckt ist, das Gleiteigenschaften aufweist, wodurch zwischen dem Körper und dem Belag eine Zwischenschicht (905) eingelegt wird, die elastische Eigenschaften hat, wobei der Belag eine Abdichtungsoberfläche bildet, über die der Kolben (9) gleitend, im Wesentlichen in abdichtender Weise, mit der zylindrischen Wand der Bohrung (51) in Verbindung steht.

8. Pumpe nach einem der vorhergehenden Ansprüche, die **dadurch gekennzeichnet ist, dass** die Evakuiermittel ferner eine Vakuumöffnung (65) zum-Evakuieren über den oberen Bereich der Kammern aufweisen, wobei die Pumpe ein Vakuumpumpensystem (13) aufweist, mit dem zugleich die Vakuumleitungen (52) der zylindrischen Kammern, und die Vakuumöffnung (65) verbunden sind.

9. Pumpe nach einem der vorhergehenden Ansprüche, die **dadurch gekennzeichnet ist, dass** die zylindrischen Kammern (8) in axialer Richtung ausgerichtet sind, wobei die Kolben (9) parallel zur Rotationsachse der Trommel ausgerichtet werden können, und der Deckel (6) mit einer Einfüllöffnung (63) und einer Anstauöffnung (64) ausgestattet ist.

10. Pumpe nach einem der vorhergehenden Ansprüche, die **dadurch gekennzeichnet ist, dass** sie darüber hinaus Schneidemittel aufweist, die ein Blatt (70) umfassen, das entlang des Rands hinter der Einfüllöffnung (63) vorgesehen ist, um die Produktstücke zu schneiden, die aus den zylindrischen Kammern bei ihrer Passage über die Einfüllöffnung herausragen.
